# EUROPEAN PATENT SPECIFICATION

(11) **EP 4 393 699 B1**
(45) Date of publication and mention of the grant of the patent: **02.12.2026**
(21) Application number: 22880332.6
(22) Date of filing: 12.10.2022
(51) Int. Cl.: B32B 15/18, B32B 7/12, B32B 27/08, B32B 27/28

(54) **CHROMIUM-FREE PASSIVATED FILM-COVERED TINNED PLATE AND PREPARATION METHOD THEREFOR**
CHROMFREIE PASSIVIERTE FILMBESCHICHTETE VERZINNTE PLATTE UND HERSTELLUNGSVERFAHREN DAFÜR
TÔLE ÉTAMÉE RECOUVERTE D'UN FILM PASSIVÉ EXEMPT DE CHROME ET SON PROCÉDÉ DE PRÉPARATION

(30) Priority: 12.10.2021 CN 202111184826
(43) Date of publication of application: 03.07.2024
(73) Proprietor: BAOSHAN IRON & STEEL CO., LTD., Shanghai 201900 (CN)
(72) Inventor: WANG, Zhangwei, Shanghai 201900 (CN); WEI, Junsheng, Shanghai 201900 (CN); LI, Peng, Shanghai 201900 (CN); CHEN, Hongxing, Shanghai 201900 (CN); NI, Hua, Shanghai 201900 (CN)
(74) Representative: Maiwald GmbH
(86) International application number: PCT/CN2022/124793
(87) International publication number: WO 2023/061396

(56) References cited:
- EP-A1- 3 363 629
- CN-A- 104 451 636
- CN-A- 105 331 966
- CN-A- 111 304 706
- US-A1- 2018 347 051

## Description

### TECHNICAL FIELD

The present invention relates to a composite material and a manufacturing method thereof, in particular to a tinned plate and a manufacturing method thereof.

### BACKGROUND

It is well known that film-covered iron is a composite packaging material in which a surface of a metal plate is covered with a polyester film represented by PET (polyethylene terephthalate), and can be used to manufacture a metal can to solve the problem of precipitation of a harmful substance, Bis-phenol A, caused by the situation that the inside of the conventional metal can must be subjected to a coating process.

The production of a film-covered plate is solvent-free and has no exhaust gas discharge, with no paint drying required, less pollution to the environment, and can effectively save energy. In the production of food, a metal can made of the composite material like film-covered iron can significantly improve the safety of canned food. With the gradual promotion of the metal plate film-covering technology in recent years, using film to cover the iron instead of a coating to improve the safety of canned food has been widely recognized.

Among the film-covered irons, there may be film-covered tinned iron, which is generally manufactured by covering a surface of a tinned plate with a polyester film; and the film-covered tinned iron has a significant glossy appearance, as well as good workability and corrosion resistance, and thus has good application prospects.

In the prior art, although the tinned plate has been widely used in the metal container industry, the tinned plate has the characteristic that the melting point of the tin coating is low, and the conventional passivation treatment scheme gives the tinned plate relatively poor adhesion performance, which is not conducive to the adhesion of polyester film on the surface. Therefore, only a few studies have been carried out for using the tinned plate as a substrate of the film-covered iron to perform film covering.

For example, Chinese patent publication No. CN102257185A, published on November 13, 2011, and entitled as "Surface-treated steel sheet on which particulate tin is deposited and resin-coated steel sheet", discloses a surface-treated tinned plate in which metallic tin is discontinuously dispersed in a granular form on the surface of a steel sheet, and its surface having exposed iron can be laminated with a resin film to ensure the adhesion performance.

For another example, Chinese patent publication No. CN108950613A, published on December 7, 2018, and entitled as "Preparation method of tinned plate and application of tinned plate prepared by preparation method", discloses a tinned plate, wherein a sodium dichromate solution having a concentration of 27-31 g/L is used as a passivating solution. Although the produced tinned plate with an extremely low tin amount can be used for film covering, its surface brightness is different from that of a tinned plate with a conventional tin amount and the corrosion resistance will be affected, while using the sodium dichromate solution as the passivating solution is unfavorable for environment protection, and the environmental treatment costs are high.

The document EP3363629A1 discloses an example of a chromium-free passivated and film-covered tinned plate.

To sum up, it can be seen that the passivation treatment scheme for the tinned plate in the prior art is not ideal. Therefore, in view of the defects and deficiencies existing in the prior art, the present invention optimally designs a new passivation treatment solution to passivate the tinned plate, thereby obtaining a chromium-free tinned plate with a passivation film that does not contain chromium.

**In** order to obtain better processability and corrosion resistance of the sheet material, in the present invention, a polyester film can further be thermally laminated onto the chromium-free tinned plate of the present invention to obtain a new chromium-free passivated and film-covered tinned plate; The adoption of this chromium-free tinned plate as a film-covered iron substrate is more environment friendly and energy-saving. Excellent adhesion performance and barrier property can be ensured after the chromium-free tinned plate is laminated with the polyester film, which is suitable for use in the field of food can and lid processing.

In the present description, the following conversion rate will be applied : 1kgf/cm² = 98066.5Pa.

### SUMMARY

One of the objects of the present invention is to provide a chromium-free passivated and film-covered tinned plate. The tinned plate of the chromium-free passivated and film-covered tinned plate has high adhesion with a polyester film laminated on a surface of the tinned plate, and the obtained chromium-free passivated and film-covered tinned plate product does not contain heavy metals and organic components which are potentially toxic to human bodies. The product is non-toxic in food contact and can satisfy the requirements of shaping processing and corrosion resistance required for food and beverage packaging containers, which has good promotion prospects and application values.

In order to achieve the above object, the present invention provides a chromium-free passivated and film-covered tinned plate, comprising a tinned plate and a polyester film laminated on a surface of the tinned plate, wherein the tinned plate comprises a substrate, a tin coating covering the substrate and a passivation film covering a surface of the tin coating; wherein the passivation film does not contain chromium, and contains 2.0-20 mg/m² of zinc and 10-60 mg/m² of silicon, and a polyester film comprising, in a thickness direction, a first layer and a second layer; wherein the first layer is formed of a modified copolyester having a melting point of 180-220°C and is in contact with the passivation film; and wherein the second layer is formed of a mixture of a modified copolyester and a homopolyester and is disposed on the first layer, wherein the second layer has a melting point of 220-255°C.

Preferably, in the above technical solution of the present invention, the chromium-free passivated and film-covered tinned plate according to the present invention comprises: a tinned plate and a polyester film laminated on a surface of the tinned plate, wherein an interlayer structure of the tinned plate sequentially includes: a steel substrate, a tin-iron alloy layer, a tin layer and a passivation film.

In the chromium-free passivated and film-covered tinned plate of the present invention, the surface of the tin coating of the tinned plate is covered with a passivation film which does not contain chromium and contains 2.0-20 mg/m² of zinc and of 10-60 mg/m² silicon, wherein zinc in the passivation film may be derived from a zinc salt, and silicon in the passivation film may be derived from an organosiloxane or a polysiloxane.

In the present invention, the polyester film can be laminated onto the surface of the tinned plate of which the surface is covered with a chromium-free passivation film. This tinned plate with the chromium-free passivation film has very excellent adhesion performance with the polyester film and barrier property, and its production process is environment friendly. The product does not contain heavy metals and organic components which are potentially toxic to human body, and thus is non-toxic in food contact and environment friendly, which has good promotion prospects and application values.

The chromium-free passivated and film-covered tinned plate of the present invention, the polyester film comprises, in a thickness direction, a first layer and a second layer, wherein the first layer formed of a modified copolyester having a melting point of 180-220°C is in contact with the passivation film, and wherein the second layer formed of a mixture of a modified copolyester and a homopolyester has a melting point of 220-255°C.

Preferably, in the mixture of the modified copolyester and the homopolyester, the mixture includes 40-70 wt% of the modified copolyester and 30-60 wt% of the homopolyester.

In the present invention, the inventors have optimally designed a polyester film having a two-layer structure in the thickness direction, which includes a "first layer" in contact with the passivation film and a "second layer" not in contact with the passivation film. The polyester film having the above structure of the present invention is completely different from the prior art. The first layer of the polyester film is formed by the modified copolyester having a melting point of 180-220°C, and the second layer of the polyester film is formed by the mixture of the modified copolyester and the homopolyester, and the melting point of the second layer is controlled to be 220-255°C.

It should be noted that this polyester film having the two-layer structure in the thickness direction designed by the present invention can be manufactured by a three-layer coextrusion biaxial stretching method. The total thickness of the polyester film can be preferably controlled to be 12-35 µm; the thickness of the first layer of the polyester film may preferably be controlled to be 6-15 µm; and the thickness of the second layer of the polyester film may preferably be controlled to be 6-20 µm.

In some preferred embodiments, the homopolyester employed in the polyester film of the present invention is ethylene terephthalate (PET); and the modified copolyester is a polyester obtained by copolymerization modification of isophthalic acid, 1/4-cyclohexanedimethanol, and neopentyl glycol.

In the present invention, the first layer of the polyester film is a thermally laminated layer. Such first layer has a relatively low melting point, which can satisfy the low-temperature film-covering condition of the tinned plate, so as to ensure that thermal laminating is completed at the melting temperature of tin or below, and ensure excellent adhesion performance, satisfying the processing and forming requirements. The second layer of the polyester film in the thickness direction can be regarded as a non-laminated layer having a relatively high melting point, so as to avoid structural damage of the non-laminated layer caused by heating and ensure good barrier property.

Preferably, in the chromium-free passivated and film-covered tinned plate of the present invention, the first layer has a melting point of 180-200°C; and/or the second layer has a melting point of 230-240°C.

Preferably, in the chromium-free passivated and film-covered tinned plate of the present invention, the first layer has a thickness of 6-15 µm; and/or the second layer has a thickness of 6-20 µm.

Preferably, in the chromium-free passivated and film-covered tinned plate of the present invention, the homopolyester comprises ethylene terephthalate.

Preferably, in the chromium-free passivated and film-covered tinned plate of the present invention, the modified copolyester is obtained by copolymerization modification of isophthalic acid, 1/4-cyclohexanedimethanol, and neopentyl glycol.

Preferably, in the chromium-free passivated and film-covered tinned plate of the present invention, a single-sided tinning amount of the tinned plate is 0.8-2.8 g/m².

**In** addition, another object of the present invention is to provide a passivation treatment solution for surface treatment on a tinned plate to form a passivation film on the surface of the tinned plate, and the formed passivation film has good surface stability and high adhesion performance with a polyester film.

**In** order to achieve the above object, the present invention proposes a passivation treatment solution for forming a passivation film of the chromium-free passivated and film-covered tinned plate of the present invention, wherein the solvent in the passivation treatment solution is water, and the passivation treatment solution contains:
0.5-5.0 wt% of a zinc salt; and
10-30 wt% of an organosiloxane or a polysiloxane.

**In** the above technical solution of the present invention, the inventors have inventively designed a new passivation treatment solution with which the tinned plate can be subjected to surface treatment to form a chromium-free passivation film on the surface of the tinned plate.

The passivation film formed by the surface treatment of the tinned plate with the above passivation treatment solution of the present invention does not contain chromium, and the passivation film contains 2.0-20 mg/m² of zinc and 10-60 mg/m² of silicon. The film has good surface stability and high adhesion performance with the polyester film.

In the present invention, the passivation treatment solution according to the present invention contains: 0.5-5.0 wt% of the zinc salt; and 10-30 wt% of the organosiloxane or polysiloxane.

Preferably, the organosiloxane or the polysiloxane is obtained by hydrolysis of an epoxy silane coupling agent to provide a passivation film forming substance, which functions as a backbone of the passivation film. The substance has functional groups capable of excellent bonding with tin, to provide good sealing effects on the tin coating, and has epoxy organic functional groups which is important in ensuring adhesion performance after film covering.

Preferably, in the present invention, the zinc salt used in the passivation treatment solution is selected from at least one of zinc sulfate, zinc acetate, zinc nitrate, zinc gluconate, and zinc methionine. Zinc can be bonded with the active functional group in the passivation film, forming a dispersed and uniform distribution in the passivation film, which can significantly improve the stability of the passivation film, and the combined use can achieve an effect comparable to that of chromium passivation.

Preferably, in the passivation treatment solution according to the present invention, the organosiloxane or the polysiloxane is obtained by hydrolysis of an epoxy silane coupling agent; and/or the zinc salt is selected from at least one of zinc sulfate, zinc acetate, zinc nitrate, zinc gluconate, and zinc methionine.

Preferably, the passivation treatment solution of the present invention has a pH value of 3.0-6.0.

Correspondingly, still another object of the present invention is to provide a method for manufacturing the chromium-free passivated and film-covered tinned plate of the present invention, the method is simple in process and environment friendly. The chromium-free passivated film-covered tinned plate of the present invention can be efficiently manufactured by the method.

In order to achieve the above object, the present invention provides a method for manufacturing a chromium-free passivated and film-covered tinned plate, comprising the following steps in an order as follows:
(1) electrotinning a steel substrate to form a tin coating on the steel substrate;
(2) subjecting the steel substrate having the tin coating to a soft melting treatment, forming an iron-tin alloy layer on the steel substrate;
(3) spray-coating a passivation treatment solution to form a passivation film on a surface of the tin coating, obtaining a tinned plate having the passivation film on the surface;
(4) squeeze-drying the tinned plate;
(5) hot air drying; and
(6) thermally laminating a polyester film onto a surface of the tinned plate to obtain the chromium-free passivated and film-covered tinned plate.

In the method for manufacturing the chromium-free passivated and film-covered tinned plate according to the present invention, the steel substrate in the step (1) is not particularly limited and is preferably a cold-rolled carbon steel sheet strip, which generally needs to be subjected to cold rolling and annealing treatment, and some may also undergo secondary cold rolling after the annealing treatment is completed.

Preferably, in step (1), the steel substrate is electrotinned after being subjected to alkaline washing and acid washing, and the main salt of the electrotinning solution can be tin methanesulfonate (an MSA electrotinning system) or tin phenolsulfonate (a PSA electrotinning system), and contains necessary electroplating additives; preferably, a single-sided tinning amount of the steel substrate is 0.8-2.8 g/m².

In step (2) of the method of the present invention, after being electrotinned, the steel substrate needs to be subjected to the soft melting treatment to form the iron-tin alloy layer on the steel substrate. Preferably, the mass of the iron-tin alloy layer is controlled to be 0.3 g/m²-1.2 g/m². Preferably, the soft melting treatment is carried out by resistive soft melting or inductive soft melting alone or a combination of resistive soft melting and inductive soft melting.

In step (3) of the method of the present invention, after the soft melting treatment, the passivation treatment solution is spray-coated to form the passivation film on the surface of the tin coating, wherein the spray-coating may be a direct spraying method or a rotary spraying method.

In step (4) of the above manufacturing method of the present invention, after the surface passivation treatment is completed, the plate may be squeeze-dried by a squeezing roll. The surface of the squeezing roll is typically made of a rubber material, and the process for squeeze-drying is determined by the required amount of the passivation film; in some preferred embodiments, the pressure of the squeezing roll used in the squeeze-drying is preferably 0.5 kgf/cm²-6.5 kgf/cm², and the pressure difference in the contact range between the squeezing roll and the tinned plate is controlled to be 0.2 kgf/cm² or less.

In step (5) of the method of the present invention, after the squeeze-drying, the hot air drying may be performed, and in some preferred embodiments, the hot air temperature is controlled to be 85°C-125°C.

Preferably, in the method of the present invention, a solvent in the passivation treatment solution is water, and the passivation treatment solution contains: 0.5-5.0 wt% of a zinc salt; and 10-30 wt% of an organosiloxane or a polysiloxane.

Preferably, in the method of the present invention, the organosiloxane or the polysiloxane is obtained by hydrolysis of an epoxysilane coupling agent; and/or the zinc salt is selected from at least one of zinc sulfate, zinc acetate, zinc nitrate, zinc gluconate, and zinc methionine.

Preferably, in the method of the present invention, the passivation treatment solution has a pH value of 3.0-6.0.

Preferably, in the method of the present invention, in step (2), the soft melting treatment is performed by adopting resistive soft melting and/or inductive soft melting.

Preferably, in the method of the present invention, in step (4), a pressure of the squeezing roll used in the squeezing to be dry is 0.5 kgf/cm²-6.5 kgf/cm², and a pressure difference in a contact range between the squeezing roll and the tinned plate is 0.2 kgf/cm² or less.

Preferably, in the method of the present invention, in step (5), the hot air temperature is 85°C-125°C.

Preferably, in the method of the present invention, the method also comprises an oiling step between step (5) and step (6).

Preferably, in the method of the present invention, an oiling amount in the oiling step is controlled to be 1.0 mg/m²-5.5 mg/m².

Preferably, the oiling is carried out by electrostatic oiling and the oiling amount is controlled to be 1.0 mg/m²-5.5 mg/m².

Preferably, in the method of the present invention, the step (6) comprises: preheating the tinned plate to a film covering temperature;
then conveying the tinned plate and a polyester film into a film covering roller, and thermally laminating the polyester film onto a surface of the tinned plate at the film covering temperature, wherein a film covering speed is 60-150 m/min; and
performing water spray cooling on the tinned plate after completion of film covering to reduce the surface temperature of the tinned plate to be 80°C or less, then performing water quenching in a water quenching tank, and finally squeeze-drying and removing moisture from the surface of the tinned plate with a squeezing roll, obtaining the chromium-free passivated and film-covered tinned plate.

In step (6) described in the present invention, the chromium-free passivated tinned plate after the passivation treatment may be heated by an induction heater and an induction heating roller. Due to the low melting point of tin, the tinned plate can be preheated to a film covering temperature of 180-220°C, preferably 190-210°C, and kept stable, so as to avoid melting of the tin coating to the roller surface of the heating roller.

After the heating is completed, the tinned plate may be conveyed into the film covering roller, while controlling the polyester film on both sides to enter the film covering roller together with the tinned plate under the action of a film guide roller. The film covering speed is controlled to be 60-150 m/min, and a film covering pressure is preferably 2-10 kg. The polyester film having a two-layer structure in the thickness direction is thermally laminated onto the tinned plate by the film covering roller.

After completion of laminating, water spray cooling needs to be performed on the tinned plate after completion of film covering to reduce the surface temperature of the tinned plate to be 80°C or less, then water quenching is performed in a water quenching tank through a sink roll, and finally moisture is removed from the surface of the tinned plate by squeeze-drying with the squeezing roll to obtain the chromium-free passivated film-covered tinned plate.

Preferably, in the method of the present invention, in step (6), the film covering temperature is 180-220°C.

Preferably, in the method of the present invention, in step (6), the film covering temperature is 190-210°C.

Preferably, in the method of the present invention, in step (6), the film covering pressure is 2-10 kg.

The chromium-free passivated and film-covered tinned plate and the manufacturing method thereof according to the present invention have the following advantages and beneficial effects compared with the prior art:
The inventors have inventively designed a new passivation treatment solution with which the tinned plate can be subjected to surface treatment to form a chromium-free passivation film on the surface of the tinned plate; and the passivation film has good surface stability and high adhesion performance with the polyester film.

With the above passivation treatment solution, a new tinned plate can be obtained in the present invention, the surface of the tin coating of the tinned plate is covered with a chromium-free passivation film, which can ensure high adhesion with the film-covered iron having a low melting point while ensuring corrosion resistance, and is suitable for deep processing deformation.

Accordingly, in the present invention, the optimally designed polyester film is laminated onto the surface of the tinned plate covering with the chromium-free passivation film to obtain the chromium-free passivated and film-covered tinned plate according to the present invention. The process for manufacturing the chromium-free passivated and film-covered tinned plate product is environment friendly, and the tinned plate has high adhesion performance with the polyester film laminated on the surface of the tinned plate. The chromium-free passivated and film-covered tinned plate does not contain heavy metals and organic components which are potentially toxic to human bodies, and is non-toxic in food contact, which can satisfy the requirements of shaping processing and corrosion resistance required for food and beverage packaging containers, and thus the tinned plate has good promotion prospects and application values.

### DETAILED DESCRIPTION

The chromium-free passivated and film-covered tinned plate and the manufacturing method thereof according to the present invention will be further explained and described below with reference to the accompanying drawings and specific examples, however, the explanation and description do not constitute an improper limitation of the technical solution of the present invention.

### Examples 1-6 and Comparative examples 1-2

Table 1 lists pH values and composition ratios of passivation treatment solutions in Examples 1-6.

**Table 1**

| No. | pH value of the passivation treatment solution | Zinc salt composition | Mass percent of zinc salt (wt%) | Mass percent of organosiloxane or polysiloxane (wt%) |
|---|---|---|---|---|
| Example 1 | 4.1 | Zinc sulfate | 0.5 | 15 |
| Example 2 | 3.0 | 0.5 wt% zinc sulfate+1.0 wt% zinc acetate | 1.5 | 10 |
| Example 3 | 3.6 | Zinc nitrate | 2.5 | 25 |
| Example 4 | 4.8 | 1.5 wt% zinc methionine+2.7 wt% zinc gluconate | 4.2 | 12 |
| Example 5 | 5.3 | 1.5 wt% zinc sulfate+3.5 wt% zinc nitrate | 5.0 | 18 |
| Example 6 | 6.0 | Zinc acetate | 3.0 | 30 |

As shown in Table 1, pH values of the passivation treatment solutions in Examples 1-6 of the present invention and concentration ratios of components in the solutions all meet the preferred design requirements of the present invention. Unlike the passivation treatment solutions used in Examples 1-6, passivation treatment solutions in Comparative examples 1-2 use a sodium dichromate solution known in the art.

In the present invention, a tinned plate is subjected to passivation treatment by adopting the passivation treatment solutions in Examples 1-6 of the present invention to form a chromium free passivation film on the surface of the tinned plate; and the conventional dichromate solution in Comparative examples 1-2 is used to electrochemically passivate the tinned plate to form a conventional chromium-containing passivation film.

After completion of the above surface treatment, a polyester film is thermally laminated onto the surface of the tinned plate treated with surface passivation corresponding to the Examples and Comparative examples, thereby obtaining chromium-free passivated and film-covered tinned plates corresponding to Examples 1-6 of the present invention and chromium-containing passivated and film-covered tinned plates corresponding to Comparative examples 1-2.

It should be noted that in the present invention, the tinned plate before the surface treatment may be selected from existing plates in the prior art, and its interlayer structure may sequentially include a steel substrate, a tin-iron alloy layer, and a tin coating. The composition of the tinned plate is not particularly limited in the present invention, and existing composition systems in the prior art capable of achieving the technical effects of the present invention can all be used, preferably a tinned plate having a single-sided tinning amount of 0.8-2.8 g/m².

In the present invention, both the chromium-free passivated and film-covered tinned plates in Examples 1-6 and the chromium-containing passivated and film-covered tinned plates in Comparative examples 1-2 are manufactured by the following steps:
(1) electrotinning a steel substrate to form a tin coating on the steel substrate: subjecting the steel substrate after cold rolling and annealing and quenching and tempering treatment to alkaline washing for degreasing, and acid washing for activating the surface, and then performing conventional electrotinning, wherein the main salt of the electroplating solution is selected from tin methanesulfonate (an MSA electrotinning system) or tin phenolsulfonate (a PSA electrotinning system), and contains necessary electroplating additives; and a single-sided tinning amount of the steel substrate is 0.8-2.8 g/m²;
(2) subjecting the steel substrate having the tin coating to a soft melting treatment by resistive soft melting and/or inductive soft melting to form an iron-tin alloy layer on the steel substrate; wherein the mass of the iron-tin alloy layer is controlled to be 0.3 g/m²-1.2 g/m²; the soft melting treatment is carried out by resistive soft melting or inductive soft melting alone, or by a combination of resistive soft melting and inductive soft melting;
(3) spray-coating a passivation treatment solution to form a passivation film on a surface of the tin coating to obtain a tinned plate having a passivation film on its surface; wherein the spray-coating is carried out by a direct spraying method or a rotary spraying method;
(4) squeeze-drying the tinned plate: wherein a pressure of a squeezing roll used in the squeeze-drying is controlled to be 0.5 kgf/cm²-6.5 kgf/cm², and a pressure difference in the contact range between the squeezing roll and the tinned plate is controlled to be 0.2 kgf/cm² or less;
(5) hot air drying: wherein the hot air temperature is controlled to be 85°C-125°C;
(6) oiling: wherein the oiling amount is controlled to be 1.0 mg/m²-5.5 mg/m²; and
(7) thermally laminating a polyester film onto a surface of the tinned plate: preheating the tinned plate after surface treatment to a film covering temperature of 180-220°C, preferably 190-210°C, by an induction heater and an induction heating roller; then conveying the tinned plate and the polyester film into a film covering roller, the polyester film on both sides entering the film covering roller together with the tinned plate under the action of the film guide roller to thermally laminate the polyester film onto the surface of the tinned plate at the film covering temperature, wherein the film covering speed is 60-150 m/min, and the film covering pressure is 2-10 kg; and performing water spray cooling on the tinned plate after completion of film covering to reduce the surface temperature of the tinned plate to 80°C or less, then performing water quenching in a water quenching tank through a sink roll, and finally squeeze-drying and removing moisture from the surface of the tinned plate with a squeezing roll, obtaining the chromium-free passivated and film-covered tinned plate.

In the above manufacturing method of the present invention, in Examples 1-6 and Comparative examples 1-2, the polyester film needs to be thermally laminated onto the surface of the surface treated tinned plate to obtain the corresponding film-covered tinned plate.

In the present invention, both Examples 1-6 and Comparative examples 1-2 employ the optimally designed polyester film having a low melting point of the present invention, and this polyester film has two layers in the thickness direction, including a "first layer" in contact with the passivation film and a "second layer" which is located on the first layer and not in contact with the passivation film. The first layer is formed of a modified copolyester having a melting point of 180-220°C, and a thickness of the first layer is preferably controlled to be 6-15 µm; the second layer is formed of a mixture of a modified copolyester and a homopolyester, the second layer preferably has a melting point of 220-255°C, and a thickness of the second layer is preferably controlled to be 6-20 µm.

In some preferred embodiments, in order to achieve better technical effects, the melting point of the first layer is preferably controlled to be 180-200°C; and the melting point of the second layer is preferably controlled to be 230-240°C.

In the present invention, the first layer of the polyester film in the thickness direction is in contact with the passivation film and can be regarded as a thermally laminated layer. The first layer has a relatively low melting point and can be thermally laminated with the surface of the tinned plate at a temperature lower than the melting point of the tin layer. Accordingly, the second layer of the polyester film in the thickness direction can be regarded as a non-laminated layer and has a relatively high melting point, which can avoid structural damage of the non-laminated layer caused by heating and ensure good barrier property.

It should be noted that for the polyester film of the two-layer structure used in the present invention, the thermally laminated layer (the first layer) of the polyester film plays a major role in adhesion property and the non-thermally-laminated layer (the second layer) is mainly used as a barrier. Therefore, the increase in the thickness of the thermally laminated layer (the first layer) contributes to the increase in adhesion performance.

In the present invention, the homopolyester in the second layer in the thickness direction of the polyester film employed in Examples 1-6 and Comparative examples 1-2 may include ethylene terephthalate; and the modified copolyester in both the first layer and the second layer of the polyester film can be obtained by copolymerization modification of isophthalic acid, 1/4-cyclohexanedimethanol, and neopentyl glycol. In the present invention, the melting points of two layers in the thickness direction and the layer thicknesses of the polyester film employed in Examples 1-6 and Comparative examples 1-2 are listed in Table 2 below.

Meanwhile, the mass percent of the modified copolyesters in the mixed second layer of the polyester film used in the Examples and Comparative examples is also listed in Table 2 below.

**Table 2**

| No. | First layer | | Second layer | | | |
|---|---|---|---|---|---|---|
| | Melting point (°C) | Thickness (µm) | Melting point (°C) | Thickness (µm) | Mass percent of the modified copolyester (%) | Mass percent of the homopolyester (%) |
| Example 1 | 180 | 6 | 220 | 6 | 70 | 30 |
| Example 2 | 190 | 8 | 230 | 10 | 60 | 40 |
| Example 3 | 190 | 8 | 230 | 10 | 60 | 40 |
| Example 4 | 210 | 10 | 240 | 15 | 50 | 50 |
| Example 5 | 220 | 15 | 250 | 20 | 40 | 60 |
| Example 6 | 220 | 15 | 250 | 20 | 40 | 60 |
| Comparative example 1 | 190 | 8 | 230 | 10 | 60 | 40 |
| Comparative example 2 | 220 | 15 | 250 | 20 | 40 | 60 |

In conclusion, in the present invention, the process parameters used in the above manufacturing process of Examples 1-6 all meet the preferred design requirements of the present invention. The passivation treatment solution adopted in Comparative examples 1-2 is a sodium dichromate solution known in the art, which does not meet the parameters of the preferred design solution of the present invention.

Table 3-1 lists the related process parameters for the chromium-free passivated and film-covered tinned plates in Examples 1-6 and Comparative examples 1-2 in steps (2) to (6) above.

Table 3-2 lists the related process parameters for the chromium-free passivated and film-covered tinned plates in Examples 1-6 and the chromium-containing passivated film-covered tinned plates in Comparative examples 1-2 in the above step (7).

**Table 3-1**

| No. | Soft melting treatment method | Squeezing roll pressure (kgf/cm²) | Pressure difference in the contact range between squeezing roll and the tinned plate (kgf/cm²) | Hot air temperature (°C) | Oiling amount (mg/m²) |
|---|---|---|---|---|---|
| Example 1 | Inductive soft melting | 0.5 | 0.05 | 125 | 3.5 |
| Example 2 | Resistive soft melting | 2 | 0.07 | 108 | 2 |
| Example 3 | Resistive soft melting | 4.5 | 0.12 | 100 | 1 |
| Example 4 | Inductive soft melting | 5.5 | 0.20 | 85 | 5.5 |
| Example 5 | Inductive soft melting+resistive soft melting | 6.5 | 0.18 | 95 | 2.5 |
| Example 6 | Inductive soft melting | 3 | 0.08 | 105 | 4.5 |
| Comparative example 1 | Inductive soft melting | - | - | - | 3.5 |
| Comparative example 2 | Inductive soft melting | - | - | - | 2.5 |

**Table 3-2**

| No. | Film covering temperature (°C) | Film covering speed (m/min) | Film covering pressure (kg) | Final cooling temperature of water spray cooling (°C) |
|---|---|---|---|---|
| Example 1 | 180 | 70 | 5 | 80 |
| Example 2 | 190 | 80 | 5 | 80 |
| Example 3 | 190 | 100 | 10 | 80 |
| Example 4 | 210 | 120 | 5 | 80 |
| Example 5 | 220 | 80 | 5 | 80 |
| Example 6 | 220 | 120 | 10 | 80 |
| Comparative example 1 | 190 | 80 | 5 | 80 |
| Comparative example 2 | 220 | 80 | 5 | 80 |

It should be noted that during performing step (1) of the above manufacturing process of the present invention, the tinned plate needs to be surface treated by the passivation treatment solutions in Examples 1-6 and the passivation treatment solutions in Comparative examples 1-2. Before the surface treatment, the single-sided tinning amount of the tinned plate used in the Examples and Comparative examples are detected. The results are listed in Table 4.

After completion of the surface passivation treatment in step (1), the composition of the passivation film on the surface of the tinned plate after passivation treatment in the Examples and Comparative examples is analyzed and detected to obtain the chromium content, the zinc content and the silicon content in the passivation film, and the related detection results are listed in Table 4 below.

Table 4 lists the single-sided tinning amount of the tinned plate and the zinc content and the silicon content in the passivation film in Examples and Comparative examples.

**Table 4**

| No. | Chromium content in passivation film (mg/m²) | Zinc content in passivation film (mg/m²) | Silicon content in passivation film (mg/m²) | Single-sided tinning amount (g/m²) |
|---|---|---|---|---|
| Example 1 | 0 | 20 | 60 | 2.8 |
| Example 2 | 0 | 15 | 49 | 2.0 |
| Example 3 | 0 | 9 | 31 | 2.2 |
| Example 4 | 0 | 4 | 26 | 1.1 |
| Example 5 | 0 | 5 | 10 | 0.8 |
| Example 6 | 0 | 17 | 37 | 1.6 |
| Comparative example 1 | **5.4** | 0 | 0 | 2.8 |
| Comparative example 2 | **3.6** | 0 | 0 | 1.1 |

As can be seen from Table 4, after the tinned plates in Examples 1-6 of the present invention have been subjected to surface passivation treatment by the passivation treatment solution, the produced passivation film does not contain chromium, and contains 2.0-20mg/m² of zinc and 10-60mg/m² of silicon.

The chromium-free passivated and film-covered tinned plates in Examples 1-6 and the chromium-containing passivated and film-covered tinned plates in Comparative examples 1-2 of the present invention were separately sampled. The samples in the Examples and Comparative examples were subjected to the cupping adhesion performance test, and the test results are shown in Table 5 below.

The cupping adhesion performance test was performed as follows:
(1) grid carving: nine-palace grid was carved on the surfaces of the sample plates in the Examples and Comparative examples with a cutter knife. Each carve has a length of more than 50 mm, and a film layer was carved with a scratch interval of 5 mm. The carving force was moderate to ensure that the film layer was carved through without carving the substrate.
(2) Cupping: the samples on which the grids were carved were put into a cupping apparatus, with surfaces to-be-tested facing away from a punch. The punch was located just in the middle of the nine-palace grid; the cupping apparatus was then switched on and the samples were punched at a speed of (0.2±0.1) mm/s, while a cupping height was controlled to be 4 mm.
(3) Cooking: deionized water was added in an appropriately sized beaker so that the grid-carved and cupped portions of the samples can be completely immersed in the deionized water; and the beaker along with the samples to be tested were put inside a pressure steam sterilizer, wherein the cooking temperature was set to be 121°C and maintained for 60 min.
(4) Visual evaluation: after the sample plates were taken out and wiped to be dry, it was observed whether the film layer was peeled off at the carved grids of the sample plates of the Examples and Comparative examples, particularly at the intersections among the grids of the nine-palace grid. If the film layer was peeled off, the peeling distance was measured by a steel ruler.

Table 5 lists the results of the cupping adhesion performance test for the chromium-free passivated and film-covered tinned plates in Examples 1-6 and the chromium-containing passivated and film-covered tinned plates in Comparative examples 1-2.

**Table 5**

| No. | Cupping adhesion peeling distance (mm) |
|---|---|
| Example 1 | 0 |
| Example 2 | 0 |
| Example 3 | 0 |
| Example 4 | 0 |
| Example 5 | 0 |
| Example 6 | 0 |
| Comparative example 1 | 1 |
| Comparative example 2 | 2 |

It can be seen from Table 5 that in Examples 1-6, after the cupping adhesion performance test, the cupping adhesion peeling distances were "0"; while in Comparative examples 1-2, after the cupping adhesion performance test, the cupping adhesion peeling distances were "1 mm" and "2 mm", respectively.

Compared with Comparative examples 1-2 in which the passivation treatment was carried out by the conventional sodium dichromate solution, by covering the surface of the tin coating with the chromium-free passivation film, the chromium-free passivated and film-covered tinned plates having better film surface adhesion performance were obtained in Examples 1-6 of the present invention. This is mainly because the organosiloxane or the polysiloxane in the passivation treatment solution of the present invention is obtained by hydrolysis of the epoxy silane coupling agent to provide the passivation film forming substance, and the epoxy organic functional group in the passivation film has an important role in ensuring the adhesion performance after film covering.

Meanwhile, as can be seen from Table 5 above, under the condition of ensuring the adhesion performance, the adaptability of the surface of the tinned plate of the present invention to the polyester film is improved after subjecting to chromium-free passivation treatment, which is beneficial to developing the process window and stabilizing the process control.

It should be noted that the combinations of the technical features in the present invention are not limited to the combinations described in the claims of the present invention or the combinations described in the specific Examples, and all technical features described in the present invention can be freely combined or integrated in any way unless there is a conflict among the technical features.

It should also be noted that the Examples listed above are only specific embodiments of the present invention. Obviously, the present invention is not limited to the above Examples, and similar modifications or variations that can be directly derived from or can be easily thought of by those skilled in the art from the disclosure of the present invention should all fall within the protection scope of the present invention.

## Claims

1. A chromium-free passivated and film-covered tinned plate, comprising a tinned plate and a polyester film laminated on a surface of the tinned plate, wherein the tinned plate comprises a substrate, a tin coating and a passivation film covering a surface of the tin coating; wherein the passivation film does not contain chromium, and contains 2.0-20 mg/m² of zinc and 10-60 mg/m² of silicon, and wherein the polyester film comprises, in a thickness direction, a first layer and a second layer; wherein the first layer is formed of a modified copolyester having a melting point of 180-220°C and is in contact with the passivation film; and wherein the second layer is formed of a mixture of a modified copolyester and a homopolyester and is disposed on the first layer, wherein the second layer has a melting point of 220-255°C.

2. The chromium-free passivated and film-covered tinned plate according to claim 1, wherein the first layer has a melting point of 180-200°C; and/or the second layer has a melting point of 230-240°C.

3. The chromium-free passivated and film-covered tinned plate according to claim 1, wherein the first layer has a thickness of 6-15 µm; and/or the second layer has a thickness of 6-20 µm.

4. The chromium-free passivated and film-covered tinned plate according to claim 1, wherein the homopolyester comprises ethylene terephthalate.

5. The chromium-free passivated and film-covered tinned plate according to claim 1, wherein the modified copolyester is obtained by copolymerization modification of isophthalic acid, 1/4-cyclohexanedimethanol, and neopentyl glycol.

6. The chromium-free passivated and film-covered tinned plate according to claim 1, wherein a single-sided tinning amount of the tinned plate is 0.8-2.8 g/m².

7. A passivation treatment solution for forming a passivation film of the chromium-free passivated and film-covered tinned plate according to any one of claims 1 to 6, wherein a solvent in the passivation treatment solution is water, and the passivation treatment solution contains:
0.5-5.0 wt% of a zinc salt; and
10-30 wt% of an organosiloxane or a polysiloxane.

8. The passivation treatment solution according to claim 7, wherein the organosiloxane or polysiloxane is obtained by hydrolysis of an epoxy silane coupling agent; and/or the zinc salt is selected from at least one of zinc sulfate, zinc acetate, zinc nitrate, zinc gluconate, and zinc methionine.

9. The passivation treatment solution according to claim 7, wherein the passivation treatment solution has a pH value of 3.0-6.0.

10. A method for manufacturing the chromium-free passivated and film-covered tinned plate according to any one of claims 1 to 6, comprising the following steps in an order as follows:
(1) electrotinning a steel substrate to form a tin coating on the steel substrate;
(2) subjecting the steel substrate having the tin coating thereon to a soft melting treatment, forming an iron-tin alloy layer on the steel substrate;
(3) spray-coating a passivation treatment solution to form a passivation film on a surface of the tin coating, obtaining a tinned plate having the passivation film on the surface;
(4) squeeze-drying the tinned plate;
(5) hot air drying; and
(6) thermally laminating a polyester film onto a surface of the tinned plate to obtain the chromium-free passivated and film-covered tinned plate.

11. The method according to claim 10, wherein a solvent in the passivation treatment solution is water, and the passivation treatment solution contains: 0.5-5.0 wt% of a zinc salt; and 10-30 wt% of an organosiloxane or a polysiloxane.

12. The method according to claim 11, wherein the organosiloxane or polysiloxane is obtained by hydrolysis of an epoxy silane coupling agent; and/or the zinc salt is selected from at least one of zinc sulfate, zinc acetate, zinc nitrate, zinc gluconate, and zinc methionine.

13. The method according to claim 10, wherein the passivation treatment solution has a pH value of 3.0-6.0.

14. The method according to claim 10, wherein in step (2), the steel substrate is subjected to the soft melting treatment by adopting resistive soft melting and/or inductive soft melting.

15. The method according to claim 10, wherein in step (4), a pressure of a squeezing roll used in the squeeze-drying is 49033Pa -637432 Pa (0.5kgf/cm² -6.5kgf/cm²), and a pressure difference in a contact range between the squeezing roll and the tinned plate is 19613Pa (0.2kgf/ cm²) or less.

16. The method according to claim 10, wherein in step (5), the hot air has a temperature of 85°C-125°C.

17. The method according to claim 10, wherein the method also comprises an oiling step between step (5) and step (6).

18. The method according to claim 17, wherein in the oiling step, an oiling amount is controlled to be 1.0 mg/m²-5.5 mg/m².

19. The method according to any one of claims 10 to 18, wherein step (6) comprises:
preheating the tinned plate to a film covering temperature;
then conveying the tinned plate and a polyester film into a film covering roller, and thermally laminating the polyester film onto a surface of the tinned plate at the film covering temperature, wherein a film covering speed is 60-150 m/min; and
performing water spray cooling on the tinned plate after completion of film covering to reduce the surface temperature of the tinned plate to be 80°C or less, then performing water quenching in a water quenching tank, and finally squeeze-drying and removing moisture from the surface of the tinned plate with a squeezing roll, obtaining the chromium-free passivated and film-covered tinned plate.

20. The method according to claim 19, wherein in step (6), the film covering temperature is 180-220°C.

21. The method according to claim 19, wherein in step (6), the film covering temperature is 190-210°C.

22. The method according to claim 19, wherein in step (6), a film covering pressure is 2-10 kg

## Patentansprüche

1. Eine chromfrei passivierte und mit einem Film bedeckte verzinnte Platte, umfassend eine verzinnte Platte und einen auf eine Oberfläche der verzinnten Platte laminierten Polyesterfilm, wobei die verzinnte Platte ein Substrat, eine Zinnbeschichtung und einen Passivierungsfilm umfasst, der eine Oberfläche der Zinnbeschichtung bedeckt; wobei der Passivierungsfilm kein Chrom enthält und 2,0-20 mg/m² Zink und 10-60 mg/m² Silizium enthält, und wobei der Polyesterfilm in Richtung der Dicke eine erste Schicht und eine zweite Schicht umfasst; wobei die erste Schicht aus einem modifizierten Copolyester mit einem Schmelzpunkt von 180-220 °C gebildet ist und mit dem Passivierungsfilm in Kontakt steht; und wobei die zweite Schicht aus einer Mischung aus einem modifizierten Copolyester und einem Homopolyester gebildet ist und auf der ersten Schicht angeordnet ist, wobei die zweite Schicht einen Schmelzpunkt von 220-255 °C aufweist.

2. Chromfrei passivierte und mit einem Film bedeckte verzinnte Platte nach Anspruch 1, wobei die erste Schicht einen Schmelzpunkt von 180-200 °C aufweist; und/oder die zweite Schicht einen Schmelzpunkt von 230-240 °C aufweist.

3. Chromfrei passivierte und mit einem Film bedeckte verzinnte Platte nach Anspruch 1, wobei die erste Schicht eine Dicke von 6-15 µm aufweist; und/oder die zweite Schicht eine Dicke von 6-20 µm aufweist.

4. Chromfrei passivierte und mit einem Film bedeckte verzinnte Platte gemäß Anspruch 1, wobei der Homopolyester Ethylenterephthalat umfasst.

5. Chromfrei passivierte und mit einem Film bedeckte verzinnte Platte gemäß Anspruch 1, wobei der modifizierte Copolyester durch copolymerisatorische Modifikation von Isophthalsäure, 1/4-Cyclohexandimethanol und Neopentylglykol erhalten wird.

6. Chromfrei passivierte und mit einem Film bedeckte verzinnte Platte nach Anspruch 1, wobei die einseitige Verzinnungsmenge der verzinnten Platte 0,8-2,8 g/m² beträgt.

7. Passivierungsbehandlungslösung zur Bildung eines Passivierungsfilms auf der chromfrei passivierten und mit einem Film überzogenen verzinnten Platte gemäß einem der Ansprüche 1 bis 6, wobei ein Lösungsmittel in der Passivierungsbehandlungslösung Wasser ist und die Passivierungsbehandlungslösung enthält:
0.5-5.0 Gew.-% eines Zinksalzes; und
10-30 Gew.-% eines Organosiloxans oder eines Polysiloxans.

8. Passivierungsbehandlungslösung nach Anspruch 7, wobei das Organosiloxan oder Polysiloxan durch Hydrolyse eines Epoxysilan-Haftvermittlers erhalten wird; und/oder das Zinksalz aus mindestens einem der folgenden ausgewählt ist: Zinksulfat, Zinkacetat, Zinknitrat, Zinkgluconat und Zinkmethionin.

9. Passivierungsbehandlungslösung nach Anspruch 7, wobei die Passivierungsbehandlungslösung einen pH-Wert von 3,0 bis 6,0 aufweist.

10. Verfahren zur Herstellung der chromfrei passivierten und mit einem Film bedeckten verzinnten Platte gemäß einem der Ansprüche 1 bis 6, umfassend die folgenden Schritte in der nachstehenden Reihenfolge:
(1) Galvanisches Verzinnen eines Stahlsubstrats, um eine Zinnbeschichtung auf dem Stahlsubstrat zu bilden;
(2) Unterziehen des Stahlsubstrats mit der darauf befindlichen Zinnbeschichtung einer Weichschmelzbehandlung, wodurch eine Eisen-ZinnLegierungsschicht auf dem Stahlsubstrat gebildet wird;
(3) Aufsprühen einer Passivierungsbehandlungslösung, um einen Passivierungsfilm auf der Oberfläche der Zinnbeschichtung zu bilden, wodurch eine verzinnte Platte mit dem Passivierungsfilm auf der Oberfläche erhalten wird;
(4) Presstrocknen der verzinnten Platte;
(5) Heißlufttrocknung; und
(6) thermisches Laminieren eines Polyesterfilms auf eine Oberfläche der verzinnten Platte, um die chromfreie, passivierte und mit einem Film bedeckte verzinnte Platte zu erhalten.

11. Verfahren nach Anspruch 10, wobei ein Lösungsmittel in der Passivierungsbehandlungslösung Wasser ist und die Passivierungsbehandlungslösung enthält: 0,5-5,0 Gew.-% eines Zinksalzes; und 10-30 Gew.-% eines Organosiloxans oder eines Polysiloxans.

12. Verfahren nach Anspruch 11, wobei das Organosiloxan oder Polysiloxan durch Hydrolyse eines Epoxysilan-Haftvermittlers erhalten wird; und/oder das Zinksalz aus mindestens einem der folgenden ausgewählt ist: Zinksulfat, Zinkacetat, Zinknitrat, Zinkgluconat und Zinkmethionin.

13. Verfahren nach Anspruch 10, wobei die Passivierungsbehandlungslösung einen pH-Wert von 3,0-6,0 aufweist.

14. Verfahren nach Anspruch 10, wobei in Schritt (2) das Stahlsubstrat einer Weichschmelzbehandlung unterzogen wird, wobei eine ohmsche Weichschmelzbehandlung und/oder eine induktive Weichschmelzbehandlung angewendet wird.

15. Verfahren nach Anspruch 10, wobei in Schritt (4) der Druck einer beim Quetschtrocknen verwendeten Quetschwalze 490033 Pa - 637432 Pa (0,5 kgf/cm²- 6,5 kgf/cm²), und die Druckdifferenz im Kontaktbereich zwischen der Presswalze und der verzinnten Platte 19.613 Pa (0,2 kgf/cm²) oder weniger beträgt.

16. Verfahren nach Anspruch 10, wobei in Schritt (5) die Heißluft eine Temperatur von 85 °C bis 125 °C aufweist.

17. Verfahren nach Anspruch 10, wobei das Verfahren außerdem einen Ölungsschritt zwischen Schritt (5) und Schritt (6) umfasst.

18. Verfahren nach Anspruch 17, wobei im Ölungsschritt die Ölungsmenge auf 1,0 mg/m² bis 5,5 mg/m² geregelt wird.

19. Verfahren nach einem der Ansprüche 10 bis 18, wobei Schritt (6) umfasst:
Vorheizen der verzinnten Platte auf eine Filmbeschichtungstemperatur;
anschließendes Befördern der verzinnten Platte und eines Polyesterfilms in eine Filmbeschichtungswalze und thermisches Laminieren des Polyesterfilms auf eine Oberfläche der verzinnten Platte bei der Filmbeschichtungstemperatur, wobei die Filmbeschichtungsgeschwindigkeit 60-150 m/min beträgt; und
Durchführung einer Wassersprühkühlung an der verzinnten Platte nach Abschluss der Beschichtung, um die Oberflächentemperatur der verzinnten Platte auf 80 °C oder weniger zu senken, anschließende Wasserabschreckung in einem Wasserabschreckbecken und schließlich Quetschtrocknung und Entfernung der Feuchtigkeit von der Oberfläche der verzinnten Platte mit einer Quetschwalze, wodurch die chromfrei passivierte und mit dem Film bedeckte verzinnte Platte erhalten wird.

20. Verfahren nach Anspruch 19, wobei in Schritt (6) die Beschichtungstemperatur 180-220 °C beträgt.

21. Verfahren nach Anspruch 19, wobei in Schritt (6) die Temperatur beim Aufbringen der Beschichtung 190-210 °C beträgt.

22. Verfahren nach Anspruch 19, wobei in Schritt (6) der Beschichtungsdruck 2-10 kg beträgt.

## Revendications

1. Plaque étamée passivée et recouverte d'un film sans chrome, comprenant une plaque étamée et un film de polyester laminé sur une surface de la plaque étamée, dans laquelle la plaque étamée comprend un substrat, un revêtement d'étain et un film de passivation recouvrant une surface du revêtement d'étain ; dans laquelle le film de passivation ne contient pas de chrome, et contient 2,0 à 20 mg/m² de zinc et 10 à 60 mg/m² de silicium, et dans laquelle le film de polyester comprend, dans une direction d'épaisseur, une première couche et une seconde couche ; dans laquelle la première couche est formée d'un copolyester modifié ayant un point de fusion de 180 à 220 °C et est en contact avec le film de passivation ; et dans laquelle la seconde couche est formée d'un mélange d'un copolyester modifié et d'un homopolyester et est disposée sur la première couche, dans laquelle la seconde couche a un point de fusion de 220 à 255 °C.

2. Plaque étamée passivée et recouverte d'un film sans chrome selon la revendication 1, dans laquelle la première couche a un point de fusion de 180 à 200 °C ; et/ou la seconde couche a un point de fusion de 230 à 240 °C.

3. Plaque étamée passivée et recouverte d'un film sans chrome selon la revendication 1, dans laquelle la première couche a une épaisseur de 6 à 15 µm ; et/ou la seconde couche a une épaisseur de 6 à 20 µm.

4. Plaque étamée passivée et recouverte d'un film sans chrome selon la revendication 1, dans laquelle l'homopolyester comprend du téréphtalate d'éthylène.

5. Plaque étamée passivée et recouverte d'un film sans chrome selon la revendication 1, dans laquelle le copolyester modifié est obtenu par modification par copolymérisation d'acide isophtalique, de 1/4-cyclohexanediméthanol et de néopentyle glycol.

6. Plaque étamée passivée et recouverte d'un film sans chrome selon la revendication 1, dans laquelle une quantité d'étamage unilatérale de la plaque étamée est de 0,8 à 2,8 g/m².

7. Solution de traitement de passivation pour former un film de passivation de la plaque étamée passivée et recouverte de film sans chrome selon l'une des revendications 1 à 6, dans laquelle un solvant dans la solution de traitement de passivation est de l'eau, et la solution de traitement de passivation contient :
0,5 à 5,0 % en poids d'un sel de zinc ; et
10 à 30 % en poids d'un organosiloxane ou d'un polysiloxane.

8. Solution de traitement de passivation selon la revendication 7, dans laquelle l'organosiloxane ou le polysiloxane est obtenu par hydrolyse d'un agent de couplage époxy-silane ; et/ou le sel de zinc est sélectionné parmi au moins un parmi sulfate de zinc, acétate de zinc, nitrate de zinc, gluconate de zinc et méthionine de zinc.

9. Solution de traitement de passivation selon la revendication 7, dans laquelle la solution de traitement de passivation a une valeur de pH de 3,0 à 6,0.

10. Procédé de fabrication de la plaque étamée passivée et recouverte d'un film sans chrome selon l'une des revendications 1 à 6, comprenant les étapes suivantes dans un ordre suivant :
(1) l'électro-étamage d'un substrat d'acier pour former un revêtement d'étain sur le substrat d'acier ;
(2) le fait de soumettre le substrat d'acier ayant le revêtement d'étain sur celui-ci à un traitement de fusion douce, formant une couche d'alliage fer-étain sur le substrat d'acier ;
(3) le revêtement par pulvérisation d'une solution de traitement de passivation pour former un film de passivation sur une surface du revêtement d'étain, obtenant une plaque étamée ayant le film de passivation sur la surface ;
(4) le séchage par compression de la plaque étamée ;
(5) le séchage à l'air chaud ; et
(6) le laminage thermique d'un film de polyester sur une surface de la plaque étamée pour obtenir la plaque étamée passivée et recouverte d'un film sans chrome.

11. Procédé selon la revendication 10, dans lequel un solvant dans la solution de traitement de passivation est de l'eau, et la solution de traitement de passivation contient : 0,5 à 5,0 % en poids d'un sel de zinc ; et 10 à 30 % en poids d'un organosiloxane ou d'un polysiloxane.

12. Procédé selon la revendication 11, dans lequel l'organosiloxane ou le polysiloxane est obtenu par hydrolyse d'un agent de couplage époxy-silane ; et/ou le sel de zinc est sélectionné parmi au moins un parmi sulfate de zinc, acétate de zinc, nitrate de zinc, gluconate de zinc et méthionine de zinc.

13. Procédé selon la revendication 10, dans lequel la solution de traitement de passivation présente une valeur de pH de 3,0 à 6,0.

14. Procédé selon la revendication 10, dans lequel à l'étape (2), le substrat d'acier est soumis au traitement de fusion douce en adoptant une fusion douce résistive et/ou une fusion douce inductive.

15. Procédé selon la revendication 10, dans lequel à l'étape (4), une pression d'un rouleau de compression utilisé lors du séchage par compression est de 49033 Pa à 637432 Pa (0,5 kgf/cm² à 6,5 kgf/cm²), et une différence de pression dans une plage de contact entre le rouleau de compression et la plaque étamée est de 19613 Pa (0,2 kgf/cm²) ou moins.

16. Procédé selon la revendication 10, dans lequel à l'étape (5), l'air chaud a une température de 85 °C à 125 °C.

17. Procédé selon la revendication 10, dans lequel le procédé comprend également une étape de graissage entre l'étape (5) et l'étape (6).

18. Procédé selon la revendication 17, dans lequel lors de l'étape de graissage, une quantité de graissage est commandée pour être de 1,0 mg/m² à 5,5 mg/m².

19. Procédé selon l'une des revendications 10 à 18, dans lequel l'étape (6) comprend :
le préchauffage de la plaque étamée jusqu'à une température de recouvrement de film ;
puis le convoyage de la plaque étamée et d'un film de polyester dans un rouleau de recouvrement de film, et le laminage thermique du film de polyester sur une surface de la plaque étamée à la température de recouvrement de film, dans lequel une vitesse de recouvrement de film est de 60 à 150 m/min ; et
la réalisation d'un refroidissement par pulvérisation d'eau sur la plaque étamée après achèvement du recouvrement de film pour réduire la température de surface de la plaque étamée à 80 °C ou moins, puis la réalisation d'une trempe à l'eau dans une cuve de trempe à l'eau, et enfin le séchage par compression et l'élimination d'humidité de la surface de la plaque étamée avec un rouleau de compression, obtenant la plaque étamée passivée et recouverte d'un film sans chrome.

20. Procédé selon la revendication 19, dans lequel à l'étape (6), la température de recouvrement de film est de 180 à 220 °C.

21. Procédé selon la revendication 19, dans lequel à l'étape (6), la température de recouvrement de film est de 190 à 210 °C.

22. Procédé selon la revendication 19, dans lequel à l'étape (6), une pression de recouvrement de film est de 2 à 10 kg.
